# EUROPÄISCHE PATENTANMELDUNG

(11) **EP 3 967 181 A1**
(43) Veröffentlichungstag der Anmeldung: **16.03.2022**
(21) Anmeldenummer: 21195589.3
(22) Anmeldetag: 08.09.2021
(51) Int. Cl.: A47B 9/00, A47B 21/02, G05B 19/416

(54) **ANTRIEBSSYSTEM ZUM BEWEGEN EINER HÖHENVERSTELLBAREN TISCHPLATTE, TISCH MIT EINEM SOLCHEN ANTRIEBSSYSTEM UND VERFAHREN ZUM ERFASSEN EINER KOLLISION EINER HÖHENVERSTELLBAREN TISCHPLATTE**

(30) Priorität: 15.09.2020 DE 102020211550
(71) Anmelder: Kesseböhmer Holding KG, 49152 Bad Essen (DE)
(72) Erfinder: ALBERT, Marcus, 73272 Neidlingen (DE); KLOTZ, Julian, 72660 Beuren (DE); NONNENMACHER, Andreas, 73095 Albershausen (DE); BARKAU, René, 49179 Ostercappeln (DE)
(74) Vertreter: Prüfer & Partner mbB Patentanwälte · Rechtsanwälte

(57) **Zusammenfassung**

Ein Antriebssystem (2) zum Bewegen einer höhenverstellbaren Tischplatte (3) eines Tischs (1) weist eine Antriebsvorrichtung (4), die dazu ausgebildet ist, die Tischplatte (3) zu bewegen, eine Antriebssteuerungsvorrichtung (5), die dazu ausgebildet ist, die Antriebsvorrichtung (4) zu steuern, einen Beschleunigungssensor (6), und eine Auswerteeinheit (7) auf. Der Beschleunigungssensor (6) ist dazu ausgebildet, einer Bewegung der Tischplatte (3) synchron zu folgen, eine Beschleunigung der Sensorbewegung zu erfassen, und ein der Sensorbewegung entsprechendes Beschleunigungssignal an die Auswerteeinheit (7) zu senden. Die Auswerteeinheit (7) ist dazu ausgebildet, das Beschleunigungssignal des Beschleunigungssensors auszuwerten, anhand von Beschleunigungswerten, die einen Schwellwert überschreiten, ein Vorliegen einer Kollision zu bestimmen, und beim Bestimmen des Vorliegens einer Kollision ein Kollisionssignal an die Antriebssteuerungsvorrichtung (5) auszugeben.

## Beschreibung

Die Erfindung betrifft ein Antriebssystem zum Bewegen einer höhenverstellbaren Tischplatte, einen Tisch mit einem solchen Antriebssystem und ein Verfahren zum Erfassen einer Kollision einer höhenverstellbaren Tischplatte.

Im Stand der Technik sind Tische mit höhenverstellbaren Tischplatten bekannt, die mittels eines Antriebs verstellt werden. Dabei ergibt sich das Problem, dass eine Kollision zwischen der Tischplatte und anderen Gegenständen auftreten kann, wodurch der Tisch oder der andere Gegenstand beschädigt werden kann, oder auch Körperteile von Menschen, beispielsweise durch Einklemmen, verletzt werden können.

Aus diesem Grund gibt es Verfahren zur Kollisionserkennung auf Basis einer Kraftmessung durch verform- oder komprimierbare Materialien, bei der die Verformung oder Komprimierung mit geeigneten Sensoren in elektrische Messsignale umgesetzt werden.

Darüber hinaus gibt es als weiteres Verfahren die Messung des elektrischen Versorgungsstroms der Antriebsmotoren. Dieser Strom ist abhängig von der Kraft, die auf die Tischplatte einwirkt. Bei einer Kollision steigt dieser Strom stark an, wodurch dieses Verhalten zur Erkennung von Kollisionen genutzt werden kann.

Diese Verfahren sind jedoch ungenau und träge, sodass ein Antrieb der höhenverstellbaren Tischplatte erst spät oder unzuverlässig auf eine Kollision reagieren kann.

Die der Erfindung zugrunde liegende Aufgabe liegt daher darin, die Nachteile im Stand der Technik zu eliminieren und ein Antriebssystem, einen Tisch und ein Verfahren zum Bewegen einer höhenverstellbaren Tischplatte eines Tisches bereitzustellen, die prompt und zuverlässig auf eine Kollision reagieren.

Die Aufgabe wird durch ein Antriebssystem gemäß Anspruch 1, einen Tisch gemäß Anspruch 9 und ein Verfahren gemäß Anspruch 10 gelöst. Vorteilhafte Weiterentwicklungen sind in den abhängigen Ansprüchen enthalten.

Gemäß einem Aspekt der Erfindung weist ein Antriebssystem zum Bewegen einer höhenverstellbaren Tischplatte eines Tischs eine Antriebsvorrichtung, die dazu ausgebildet ist, die Tischplatte zu bewegen, eine Antriebssteuerungsvorrichtung, die dazu ausgebildet ist, die Antriebsvorrichtung zu steuern, einen Beschleunigungssensor und eine Auswerteeinheit auf. Der Beschleunigungssensor ist dazu ausgebildet, einer Bewegung der Tischplatte synchron zu folgen, eine Beschleunigung der Sensorbewegung zu erfassen, und ein der Sensorbewegung entsprechendes Beschleunigungssignal an die Auswerteeinheit zu senden. Die Auswerteeinheit ist dazu ausgebildet, das Beschleunigungssignal des Beschleunigungssensors auszuwerten, anhand von Beschleunigungswerten, die einen Schwellwert überschreiten, ein Vorliegen einer Kollision zu bestimmen, und beim Bestimmen des Vorliegens einer Kollision ein Kollisionssignal an die Antriebssteuerungsvorrichtung auszugeben.

Durch die Auswertung des Beschleunigungssignals kann die Kollision, im Unterschied zu der Kraftmessung und der Messung des Versorgungsstroms, bereits bei einer minimalen Verformung bestimmt werden, ohne einerseits durch erforderliche Verformungen oder Komprimierung von zusätzlichen Materialien zum Erfassen der Kollision verzögert zu werden. Andererseits wird hier auch kein Motorstrom zur Erfassung der Kollision verwendet, so dass, zusätzlich zu der unmittelbaren Bestimmung, da Reaktionszeiten des Elektromotors nicht berücksichtigt werden müssen, auch Kollisionen bei andersgearteten Antrieben, beispielsweise einem Hydraulik-Antrieb, bestimmt werden können.

Gemäß einer vorteilhaften Ausgestaltung des Antriebssystems weist es einen elektrischen Antriebsmotor und ein Getriebe, das dazu ausgebildet ist, eine Drehbewegung des elektrischen Antriebsmotors in eine Linearbewegung der Antriebsvorrichtung umzuwandeln, auf.

Durch das Vorsehen des elektrischen Antriebsmotors und des Getriebes um die Drehbewegung des Elektromotors in die Linearbewegung der Antriebsvorrichtung umzuwandeln, ist ein genaues Bestimmen des Verhaltens der Antriebsvorrichtung möglich. Dabei können beispielsweise Geschwindigkeiten oder Beschleunigungen genau festgelegt werden.

In einer weiteren vorteilhaften Ausgestaltung des Antriebssystems ist, wenn eine Höhenverstellung der Tischplatte in einer Verstellrichtung erfolgt, der Beschleunigungssensor dazu ausgebildet, eine Beschleunigung in der Verstellrichtung zu erfassen, und die Auswerteeinheit ist dazu ausgebildet, Beschleunigungssignale des Beschleunigungssensors, die entsprechend den Beschleunigungen in der Verstellrichtung gesendet werden, auszuwerten, und Beschleunigungswerte von den Beschleunigungssignalen in der Verstellrichtung, die einen ersten Schwellwert überschreiten, als Vorliegen einer Kollision zu interpretieren.

Durch das Erfassen der Beschleunigung in der Verstellrichtung der Tischplatte können die Kollisionen üblicherweise direkt und schnell erfasst und bestimmt werden.

Gemäß einer noch weiteren vorteilhaften Ausgestaltung des Antriebssystems ist der Beschleunigungssensor dazu ausgebildet, Beschleunigungen in Richtungen zu erfassen, die nicht der Verstellrichtung entsprechen, und die Auswerteeinheit ist dazu ausgebildet, Beschleunigungssignale des Beschleunigungssensors, die entsprechend den Beschleunigungen in den Richtungen, die nicht der Verstellrichtung entsprechen, gesendet werden, auszuwerten, und Beschleunigungswerte von den Beschleunigungssignalen, die den Beschleunigungen in den Richtungen, die nicht der Verstellrichtung entsprechen, die einen zweiten Schwellwert überschreiten, als Vorliegen einer Kollision zu interpretieren.

Kann eine Kollision nicht direkt erkannt werden, kommt es nach der Kollision häufig zu einer Schrägstellung der Tischplatte. Dieses Schrägstellen kann von den Beschleunigungssensoren detektiert werden, sodass auch bei einer nicht-direkten Erkennung der Kollision beispielsweise aufgrund eines nachgiebigen, z.B. elastischen, Gegenstands, auf den die Tischplatte auffährt, die Kollision dennoch erkannt werden kann.

In einer weiteren vorteilhaften Ausgestaltung des Antriebssystems ist die Antriebssteuerungsvorrichtung dazu ausgebildet, eine Soll-Geschwindigkeit der Antriebsvorrichtung zu bestimmen und an die Auswerteeinheit zu übermitteln, und die Auswerteeinheit ist dazu ausgebildet, den ersten und/oder zweiten Schwellwert entsprechend der übermittelten Soll-Geschwindigkeit anzupassen, um eine Kollisionsbestimmung auch bei einer beabsichtigten Geschwindigkeitsänderung zu ermöglichen.

Da der Beginn und das Ende der Höhenverstellungsbewegung jeweils mit einer Geschwindigkeitsänderung, also jeweils einer (positiven oder negativen) Beschleunigung, verbunden sind, besteht die Gefahr, dass diese Beschleunigung als Kollision erkannt wird. Um nun nicht eine Kollisionserfassung während des Beginns und des Endes der Höhenverstellungsbewegung ausblenden zu müssen, können der erste bzw. zweite Schwellwert so angepasst werden, dass dennoch eine Kollisionserfassung möglich ist.

Bei einer weiteren vorteilhaften Ausgestaltung des Antriebssystems ist das Antriebssystem dazu ausgebildet, eine erfasste Ist-Geschwindigkeit der Antriebsvorrichtung zu erfassen, und an die Auswertevorrichtung zu übermitteln, und die Auswertevorrichtung ist dazu ausgebildet, den Schwellwert entsprechend der übermittelten Soll-Geschwindigkeit und der übermittelten erfassten Ist-Geschwindigkeit anzupassen.

Die Erfassung der Ist-Geschwindigkeit unterstützt die Kollisionserkennung, beispielsweise während des Beginns und des Endes der Höhenverstellung, da nicht nur die Soll-Werte in Betracht gezogen werden, sondern die direkt auf den Beschleunigungssensor bezogene Ist-Bewegung der Tischplatte ohne Verzögerungen in dem Antriebssystem.

In einer weiteren vorteilhaften Ausgestaltung des Antriebssystems sind die Antriebsvorrichtung, die Antriebssteuerungsvorrichtung, die Auswerteeinheit und der Beschleunigungssensor integral vorgesehen.

Durch die integrale Bauweise ist es möglich, vormontierte Baugruppen zu verwenden, die vorab getestet und kalibriert werden können, sodass eine Endmontage vereinfacht und beschleunigt wird.

Gemäß einer weiteren vorteilhaften Ausgestaltung des Antriebssystems weist das Antriebssystem eine längenverstellbare Hubsäule auf, und die Antriebsvorrichtung, die Antriebssteuerungsvorrichtung, die Auswerteeinheit und der Beschleunigungssensor sind in der Hubsäule vorgesehen.

Durch die Bauform, in der die Antriebsvorrichtung, die Antriebssteuerungsvorrichtung, die Auswerteeinheit und die Beschleunigungssensoren in den Hubsäulen vorgesehen sind, können die Antriebssysteme platzsparend verbaut werden. Ferner ist es, wie bei der integralen Bauweise, möglich, vormontierte Baugruppen zu verwenden, die vorab getestet und kalibriert werden können, wodurch die Endmontage vereinfacht und beschleunigt wird.

Gemäß einem weiteren Aspekt der Erfindung weist ein Tisch mit einer höhenverstellbaren Tischplatte mehrere Antriebssysteme auf, wobei eine Kommunikationsverbindungsleitung zwischen den mehreren Antriebssystemen vorgesehen ist, die dazu ausgebildet ist, eine Datenübertragung zwischen den mehreren Antriebssystemen zu ermöglichen.

Aufgrund des Vorsehens von mehreren Antriebssystemen können auch größere Tischplatten, insbesondere mit einer höheren Zuladung höhenverstellbar ausgebildet werden. Durch die Kommunikationsverbindungsleitung und der damit möglichen Datenübertragung können die Bewegungen der Antriebssysteme synchronisiert werden. Somit ist eine gleichmäßige Höhenverstellung der Tischplatte möglich.

Gemäß einem weiteren Aspekt der Erfindung weist ein Verfahren zum Bewegen einer höhenverstellbaren Tischplatte eines Tisches mit einem Antriebssystem die Schritte: Erfassen einer Beschleunigung der Sensorbewegung, Senden des der Sensorbewegung entsprechenden Beschleunigungssignals an die Auswerteeinheit, Auswerten des Beschleunigungssignals durch die Auswerteeinheit, Bestimmen eines Vorliegens einer Kollision anhand von Beschleunigungswerten, die einen Schwellwert überschreiten, und Ausgeben eines Kollisionssignals an die Antriebssteuerungsvorrichtung beim Bestimmen der Kollision, auf.

Durch dieses Verfahren kann die Kollision, im Unterschied zu der Kraftmessung und der Messung des Versorgungsstroms, bereits bei einer minimalen Verformung bestimmt werden, ohne durch erforderliche Verformungen oder Komprimierung von zusätzlichen Materialien zum Erfassen der Kollision verzögert zu werden. Da hier auch kein Motorstrom zur Erfassung der Kollision verwendet wird, können auch Kollisionen bei andersgearteten Antrieben, beispielsweise einem Hydraulik-Antrieb, bestimmt werden.

Entsprechend einer vorteilhaften Ausgestaltung des Verfahrens weist das Auswerten des Beschleunigungssignals ein Integrieren auf, um eine abgeschätzte Ist-Geschwindigkeit abzuschätzen.

Durch das Integrieren des Beschleunigungssignals über eine verstrichene Zeit kann die abgeschätzte Ist-Geschwindigkeit abgeschätzt werden. Die Veränderung dieser abgeschätzten Ist-Geschwindigkeit wird dann wiederum verwendet, um über eine Veränderung der abgeschätzten Ist-Geschwindigkeit die Kollision zu bestimmen.

In einer weiteren vorteilhaften Ausgestaltung des Verfahrens wird eine von der Antriebssteuerungsvorrichtung bestimmte Soll-Geschwindigkeit verwendet, um den Schwellwert anzupassen.

Da der Beginn und das Ende der Höhenverstellungsbewegung jeweils mit einer Geschwindigkeitsänderung, also jeweils einer Beschleunigung, verbunden sind, besteht die Gefahr, dass diese Beschleunigung als Kollision erkannt wird. Um nun nicht eine Kollisionserfassung während des Beginns und des Endes der Höhenverstellungsbewegung ausblenden zu müssen, wobei hier eine Wahrscheinlichkeit einer Kollision hoch ist, kann der Schwellwert so angepasst werden, dass dennoch eine Kollisionserfassung möglich ist.

Bei einer weiteren vorteilhaften Ausgestaltung des Verfahrens wird eine von dem Antriebssystem erfasste Ist-Geschwindigkeit verwendet, um den Schwellwert anzupassen.

Die Erfassung der von der Antriebsvorrichtung erfassten Ist-Geschwindigkeit unterstützt die Kollisionserkennung, beispielsweise während des Beginns und des Endes der Höhenverstellung, da nicht nur die Soll-Werte in Betracht gezogen werden, sondern die direkt auf den Beschleunigungssensor bezogene Ist-Bewegung der Tischplatte.

In einer weiteren vorteilhaften Ausgestaltung des Verfahrens werden die Beschleunigungssignale von den Beschleunigungssensoren durch einen Filter aufbereitet.

Durch das Vorsehen des Aufbereitens der Beschleunigungssignale von den Beschleunigungssensoren durch einen Filter können Störungen in den Signalen eliminiert werden, sodass eine Kollision zuverlässig erfasst werden kann.

In noch einer weiteren vorteilhaften Ausgestaltung des Verfahrens enthält es den Schritt: Übermitteln des Kollisionssignals von einem zu den anderen der mehreren Antriebssysteme.

Durch das Übermitteln des Kollisionssignals von einem Antriebssystem zu einem anderen Antriebssystem kann die Bewegung der Tischplatte unmittelbar gestoppt werden, ohne dass nachfolgend ein Kalibriervorgang erforderlich ist.

Nachfolgend wird die Erfindung anhand von Ausführungsbeispielen unter Bezugnahme auf die beigefügten Zeichnungen erläutert.

Insbesondere zeigt:
- Fig. 1: eine Prinzipdarstellung eines höhenverstellbaren Tischs mit zwei erfindungsgemäßen Antriebssystemen; und
- Fig. 2: ein Blockschaltbild eines der Antriebssysteme.

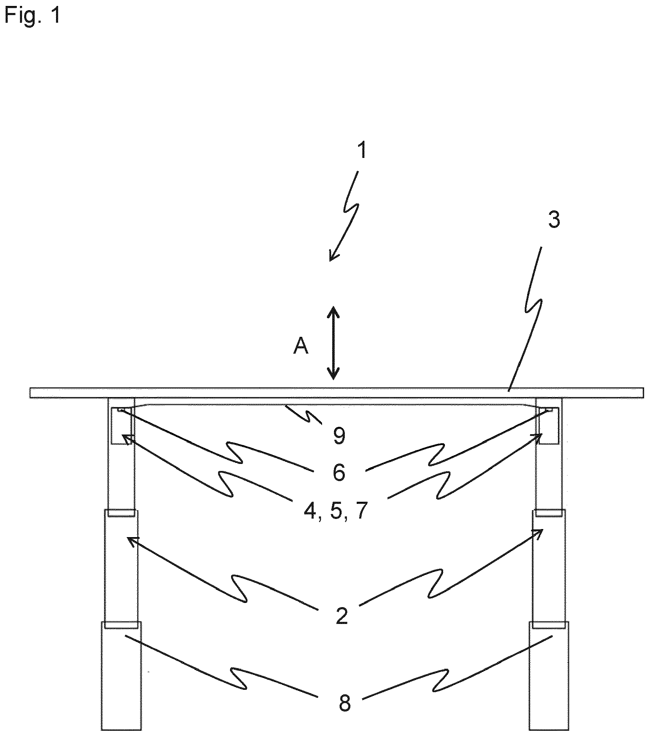

**Fig. 1** zeigt eine Prinzipdarstellung eines höhenverstellbaren Tischs 1 mit zwei erfindungsgemäßen Antriebssystemen 2.

Der Tisch 1 weist eine höhenverstellbare Tischplatte 3 auf, die mit den zwei Antriebssystemen 2 verbunden ist. In alternativen Ausführungsformen ist die Tischplatte nicht mit zwei Antriebssystemen 2 verbunden, sondern der Tisch weist lediglich ein einziges Antriebssystem 2 auf oder weist, in einer weiteren Alternative, mehr als zwei Antriebssysteme 2 auf.

Die Antriebssysteme 2 weisen jeweils eine Antriebsvorrichtung 4, eine Antriebssteuerungsvorrichtung 5, einen Beschleunigungssensor 6 sowie eine Auswerteeinheit 7 auf.

Die Antriebssysteme 2 weisen ferner jeweils eine längenverstellbare Hubsäule 8 auf. Die längenverstellbare Hubsäule 8 besteht aus drei teleskopartig ineinanderbewegbaren Abschnitten. In alternativen Ausführungsformen sind keine längenverstellbaren Hubsäulen 8 vorgesehen, sondern andere Führungselemente, wobei Antriebskräfte der Antriebsvorrichtung 4 auf andere Weise, beispielsweise über Ketten oder Stahlbänder, auf die Tischplatte 3 übertragen werden.

Die Antriebsvorrichtung 4 ist dazu ausgebildet, die Tischplatte 3 in einer Verstellrichtung A zu bewegen. In der gezeigten Ausführungsform weist die Antriebsvorrichtung 4 dazu einen elektrischen Antriebsmotor und ein Getriebe, das dazu ausgebildet ist, eine Drehbewegung des elektrischen Antriebsmotors in eine Linearbewegung der Antriebsvorrichtung 4 umzuwandeln, auf. Der Antriebsmotor weist eine Steuerelektronik und, zum Erfassen eines Wegs der Antriebsvorrichtung 4, einen Inkrementalgeber als Wegerfassungseinrichtung auf. In alternativen Ausführungsformen kann die Antriebsvorrichtung 4 beispielsweise auch als ein Hydraulikzylinder ausgeführt sein. Die Steuerelektronik und der Inkrementalgeber können in alternativen Ausführungsformen durch andere Bauteile zum Ansteuern der Antriebsvorrichtung 4 und als Wegerfassungseinrichtung, beispielsweise ein Potentiometer, ersetzt sein.

Der Beschleunigungssensor 6 ist dazu ausgebildet, einer Bewegung der Tischplatte 3 synchron zu folgen. Dies bedeutet, dass der Beschleunigungssensor 6 einer Bewegung der Tischplatte 3 unmittelbar folgt. Dabei erfasst der Beschleunigungssensor 6 eine Beschleunigung der Sensorbewegung.

Die Antriebssteuerungsvorrichtungen 5 der einzelnen Antriebssysteme 2 sind über eine Kommunikationsverbindungsleitung 9 miteinander verbunden, um eine Datenübertragung zwischen den Antriebssystemen 2 zu ermöglichen.

Die Antriebsvorrichtung 4, die Antriebssteuerungsvorrichtung 5, der Beschleunigungssensor 6 und die Auswerteeinheit 7 sind integral vorgesehen. Dies bedeutet, dass die Antriebsvorrichtung 4, die Antriebssteuerungsvorrichtung 5, der Beschleunigungssensor 6 und die Auswerteeinheit 7 als eine Baueinheit vorgesehen sind. Diese Baueinheit ist in die Hubsäule 8 eingebaut und somit in der Hubsäule 8 vorgesehen. Dabei ist der Beschleunigungssensor 6 auf einer Motorsteuerplatine der Antriebssteuerungsvorrichtung 5 angeordnet.

In alternativen Ausführungsformen sind die Antriebsvorrichtung 4, die Antriebssteuerungsvorrichtung 5, der Beschleunigungssensor 6 und die Auswerteeinheit 7 nicht integral vorgesehen, sondern die einzelnen Komponenten sind an unterschiedlichen geeigneten Stellen des Tisches angeordnet. Beispielsweise kann eine zentrale Antriebssteuerungsvorrichtung 5 für mehrere Antriebssysteme 2 zentral unterhalb der Tischplatte 3 montiert vorgesehen sein. Der jeweilige Beschleunigungssensor 6 der einzelnen Antriebssysteme 2 ist dann nicht auf der Motorsteuerplatine der Antriebssteuerungsvorrichtung 5 angeordnet, sondern an einer anderen Stelle an der Antriebsvorrichtung 4 oder in einer nahen Umgebung einer Befestigungsstelle der Antriebsvorrichtung 4 an der Tischplatte 3, um der Bewegung der Tischplatte 3 an dieser Befestigungsstelle synchron zu folgen. In einem solchen Fall ist auch keine Kommunikationsverbindungsleitung 9 zwischen den einzelnen Antriebssystemen 2 erforderlich.

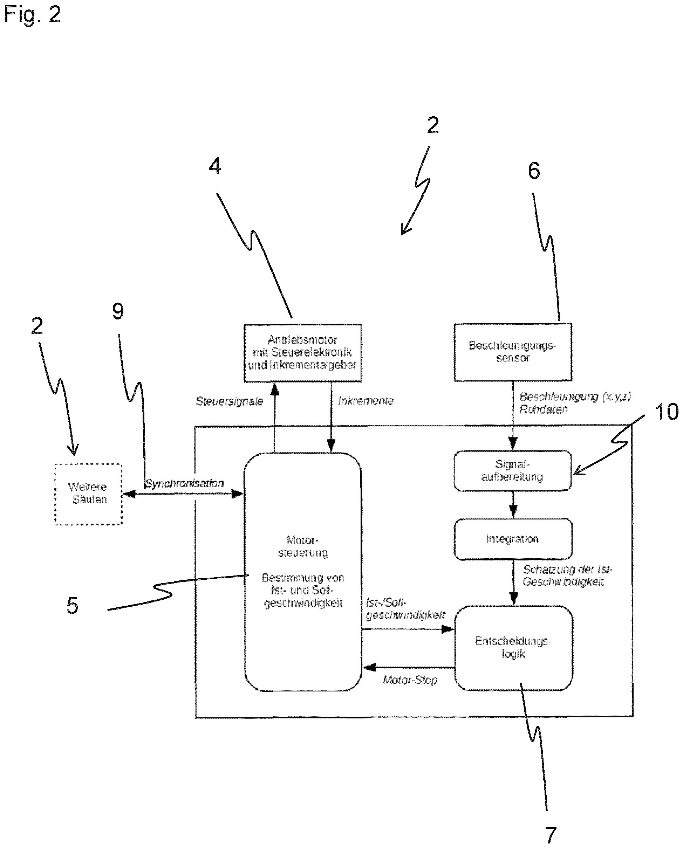

**Fig. 2** zeigt ein Blockschaltbild eines der Antriebssysteme 2.

Die Antriebsvorrichtung 4 mit dem elektrischen Antriebsmotor mit Steuerelektronik und Integralgeber sind mit der Antriebssteuerungsvorrichtung 5, die in dieser Ausführungsform als eine Motorsteuerung ausgebildet ist, verbunden. Sofern die Antriebsvorrichtung 4 in einer alternativen Ausführungsform nicht mit einem elektrischen Antriebsmotor versehen ist, sondern beispielsweise mit dem Hydraulikzylinder, ist die Antriebssteuerungsvorrichtung 5 als eine pneumatische Steuerungsvorrichtung ausgebildet.

Die Motorsteuerung bestimmt die Ist- und Soll-Geschwindigkeit des Antriebsmotors. Dies bedeutet, dass die Motorsteuerung die Soll-Geschwindigkeit des Antriebsmotors vorgibt und entsprechende Steuersignale an den Antriebsmotor sendet, und die ermittelte Ist-Geschwindigkeit des Antriebsmotors aus Inkrementen, die von dem Inkrementalgeber des Antriebsmotors an die Motorsteuerung gesendet werden, ermittelt. Daher ist die Antriebssteuerungsvorrichtung 5 dazu ausgebildet, die Antriebsvorrichtung 4 zu steuern. Dazu bestimmt sie eine Soll-Geschwindigkeit der Antriebsvorrichtung 4 und gibt entsprechende Signale an die Antriebsvorrichtung 4 weiter.

Ferner führt die Motorsteuerung über die Kommunikationsverbindungsleitung 9 eine Synchronisation mit weiteren Säulen, also mit Motorsteuerungen von Antriebs Steuerungsvorrichtungen 5 von weiteren Antriebssystemen 2 aus.

Der Beschleunigungssensor 6 ist dazu ausgebildet, Beschleunigungen in der Verstellrichtung A der Tischplatte 3 und in Richtungen, die nicht der Verstellrichtung A entsprechen, zu erfassen. In alternativen Ausführungsformen ist der Beschleunigungssensor 6 entweder dazu ausgebildet, ausschließlich Beschleunigungen in der Verstellrichtung A der Tischplatte 3, oder ausschließlich Beschleunigungen in den Richtungen, die nicht der Verstellrichtung A entsprechen, zu erfassen. In weiteren alternativen Ausführungsformen ist der Beschleunigungssensor 6 dazu ausgebildet, zusätzlich eine Rotation um zumindest eine Achse, die nicht parallel zu der Verstellrichtung A ist, zu erfassen.

Der Beschleunigungssensor 6 sendet ein der Sensorbewegung entsprechendes Beschleunigungssignal an die Auswerteeinheit 7. Dieses Beschleunigungssignal wird als Beschleunigung-(x, y, z)-Rohdaten gesendet.

Diese Rohdaten gehen zunächst in eine Signalaufbereitung, wo das Beschleunigungssignal von dem Beschleunigungssensor 6 durch einen in dem Antriebssystem 2 vorgesehenen Filter 10 aufbereitet wird. Dieser Filter 10 ist als ein digitaler Filter ausgebildet, um Störungen zu eliminieren. In alternativen Ausführungsformen kann, in Abhängigkeit von einer Konfiguration des Beschleunigungssensors 6 und der Auswerteeinheit 7, der Filter 10 auch als ein analoger Filter ausgebildet sein oder weggelassen werden.

Die von der Signalaufbereitung aufbereiteten Rohdaten werden in einer Integration integriert und somit werden weiterhin Störungen eliminiert und eine gute Abschätzung der abgeschätzten Ist-Geschwindigkeit erlangt.

Die Auswerteeinheit 7 wertet anhand einer Entscheidungslogik das Beschleunigungssignal des Beschleunigungssensors 6 aus. Die Auswerteeinheit 7 bestimmt nämlich anhand von Beschleunigungswerten, die einen Schwellwert überschreiten, dass eine Kollision vorliegt. Sofern bestimmt wird, dass eine Kollision vorliegt, wird ein Kollisionssignal, in diesem Fall ein Motor-Stopp-Signal an die Motorsteuerung als die Antriebssteuerungsvorrichtung 5 ausgegeben.

Die Auswerteeinheit 7 wertet also beim Vorhandensein des Beschleunigungssensors 6, der lediglich die Beschleunigungssignale in der Verstellrichtung A erfasst, die Beschleunigungswerte von den Beschleunigungssignalen in der Verstellrichtung A aus, und, sofern die Beschleunigungswerte einen ersten Schwellwert überschreiten, interpretiert die Auswerteeinheit 7 die Beschleunigungssignale als Vorliegen einer Kollision.

Beim Vorhandensein eines andersgearteten en Beschleunigungssensors 6, der lediglich Beschleunigungssignale in Richtungen, die nicht der Verstellrichtung A entsprechen, erfasst, wertet die Auswerteeinheit 7 die Beschleunigungswerte von den Beschleunigungssignalen, die entsprechend den Beschleunigungen in den Richtungen, die nicht der Verstellrichtung A entsprechen, gesendet werden, aus und, sofern sie einen zweiten Schwellwert überschreiten, interpretiert die Auswerteeinheit 7 die Beschleunigungssignale als Vorliegen einer Kollision.

Die Motorsteuerung als die Antriebssteuerungsvorrichtung 5 leitet die bestimmte Soll-Geschwindigkeit und die bestimmte Ist-Geschwindigkeit an die Entscheidungslogik in der Auswerteeinheit 7 weiter.

Die Auswerteeinheit 7 passt den gegebenenfalls ersten und zweiten Schwellwert entsprechend der übermittelten Soll-Geschwindigkeit und der übermittelten erfassten Ist-Geschwindigkeit an. Dadurch ist es möglich, eine Kollisionsbestimmung auch bei einer beabsichtigten Geschwindigkeitsänderung, beispielsweise an einem Beginn und einem Ende der Höhenverstellungsbewegung, durchzuführen.

Im Betrieb wird in einem Verfahren zum Bewegen einer verstellbaren Tischplatte 3 eines Tischs 1 die Beschleunigung der Sensorbewegung des Beschleunigungssensors 6 erfasst. Dabei werden Beschleunigungswerte in allen 3 Raumrichtungen bei einer hohen Erfassungsrate erfasst. Die Erfassungsrate liegt im Bereich von 100 Hz bis 1000 Hz. Alternativ sind auch andere, insbesondere höhere Erfassungsraten möglich, sofern dies durch die Rechenkapazität einer nachfolgenden Verarbeitung zugelassen wird.

Das der Sensorbewegung entsprechende Beschleunigungssignal wird an die Auswerteeinheit 7 gesendet. Dabei wird das Signal durch den digitalen Filter 10 und die anschließende Integration so aufbereitet, dass Störungen eliminiert werden, um eine verbesserte Abschätzung der Ist-Geschwindigkeit zu erhalten. Die exakten Parameter der Signalaufbereitung sind von den Antriebsvorrichtungen und dem mechanischen Aufbau abhängig, da in Abhängigkeit davon unterschiedliche Arten von Störungen auftreten können. Die Parameter werden entwicklungsseitig oder produktionsseitig einem konkreten Typ von Antrieb experimentell angepasst. Alternativ können die Beschleunigungssignale auch durch einen analogen Filter 10 aufbereitet, oder direkt ausgewertet werden.

Die aufbereiteten Geschwindigkeitsdaten werden in der Entscheidungslogik ausgewertet. Dabei wird eine Kollision anhand einer schnellen Änderung der abgeschätzten Ist-Geschwindigkeit, also einer Beschleunigung, erkannt. Insbesondere wird das Vorliegen einer Kollision anhand von Beschleunigungswerten, die einen Schwellwert überschreiten, bestimmt.

Der Schwellwert, also gegebenenfalls der erste Schwellwert und/oder der zweite Schwellwert, werden unter Verwendung von der durch die Ansteuerungsvorrichtung 5 bestimmten Soll-Geschwindigkeit angepasst. Hierbei wird berücksichtigt, dass durch die in der bestimmten Soll-Geschwindigkeit enthaltene beabsichtigte Geschwindigkeitsänderung, beispielsweise bei dem Beginn und bei dem Ende der Höhenverstellungsbewegung, Beschleunigungen auftreten, die das Bestimmen des Vorliegens einer Kollision nicht negativ beeinflussen dürfen.

Darüber hinaus wird der Schwellwert, also gegebenenfalls der erste Schwellwert und/oder der zweite Schwellwert, auch unter Verwendung von der von dem Antriebssystem 2 bestimmten, also von der erfassten Ist-Geschwindigkeit, die von der Antriebssteuerungsvorrichtung 5 unter Verwendung der von dem Inkrementalgeber erfassten Inkrementen bestimmt wird, angepasst. Dadurch ist es möglich, das Verhalten des Antriebssystems 2, insbesondere Verzögerungen aufgrund von dessen Trägheit, bei der Bestimmung des Vorliegens einer Kollision zu berücksichtigen.

Alternativ kann das Bestimmen des Vorliegens einer Kollision auch ohne Berücksichtigung der bestimmten Soll-Geschwindigkeit und der erfassten Ist-Geschwindigkeit erfolgen.

Sofern das Vorliegen einer Kollision festgestellt wird, wird ein Motor-Stopp-Signal als ein Kollisionssignal an die Motorsteuerung gegeben, um den Antriebsmotor sofort anzuhalten. Insbesondere bei mehreren Antriebssystemen 2, wird das Motor-Stopp-Signal von einem der Antriebssysteme 2 zu den anderen Antriebssystemen 2 übermittelt.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Antriebssystem (2) zum Bewegen einer höhenverstellbaren Tischplatte (3) eines Tischs (1), aufweisend:
eine Antriebsvorrichtung (4), die dazu ausgebildet ist, die Tischplatte (3) zu bewegen,
eine Antriebssteuerungsvorrichtung (5), die dazu ausgebildet ist, die Antriebsvorrichtung (4) zu steuern,
einen Beschleunigungssensor (6), und
eine Auswerteeinheit (7),
wobei
der Beschleunigungssensor (6) dazu ausgebildet ist,
einer Bewegung der Tischplatte (3) synchron zu folgen,
eine Beschleunigung der Sensorbewegung zu erfassen, und
ein der Sensorbewegung entsprechendes Beschleunigungssignal an die Auswerteeinheit (7) zu senden, und
die Auswerteeinheit (7) dazu ausgebildet ist,
das Beschleunigungssignal des Beschleunigungssensors auszuwerten,
anhand von Beschleunigungswerten, die einen Schwellwert überschreiten, ein Vorliegen einer Kollision zu bestimmen, und
beim Bestimmen des Vorliegens einer Kollision ein Kollisionssignal an die Antriebssteuerungsvorrichtung (5) auszugeben.

2. Antriebssystem (2) gemäß Anspruch 1, wobei
die Antriebsvorrichtung (4) einen elektrischen Antriebsmotor und ein Getriebe aufweist, das dazu ausgebildet ist, eine Drehbewegung des elektrischen Antriebsmotors in eine Linearbewegung der Antriebsvorrichtung (4) umzuwandeln.

3. Antriebssystem (2) gemäß einem der vorangehenden Ansprüche, wobei
wenn eine Höhenverstellung der Tischplatte (3) in einer Verstellrichtung (A) erfolgt,
der Beschleunigungssensor (6) dazu ausgebildet ist, eine Beschleunigung in der Verstellrichtung (A) zu erfassen, und die Auswerteeinheit (7) ist dazu ausgebildet, Beschleunigungssignale des Beschleunigungssensors (6), die entsprechend den Beschleunigungen in der Verstellrichtung (A) gesendet werden, auszuwerten, und Beschleunigungswerte von den Beschleunigungssignalen in der Verstellrichtung (A), die einen ersten Schwellwert überschreiten, als Vorliegen einer Kollision zu interpretieren.

4. Antriebssystem (2) gemäß Anspruch 3, wobei
der Beschleunigungssensor (6) dazu ausgebildet ist, Beschleunigungen in Richtungen zu erfassen, die nicht der Verstellrichtung (A) entsprechen, und die Auswerteeinheit (7) dazu ausgebildet ist, Beschleunigungssignale des Beschleunigungssensors (6), die entsprechend den Beschleunigungen in den Richtungen, die nicht der Verstellrichtung (A) entsprechen, gesendet werden, auszuwerten, und Beschleunigungswerte von den Beschleunigungssignalen, die den Beschleunigungen in den Richtungen, die nicht der Verstellrichtung (A) entsprechen, die einen zweiten Schwellwert überschreiten, als Vorliegen einer Kollision zu interpretieren.

5. Antriebssystem (2) gemäß einem der vorangehenden Ansprüche, wobei
die Antriebssteuerungsvorrichtung (5) dazu ausgebildet ist, eine Soll-Geschwindigkeit der Antriebsvorrichtung (4) zu bestimmen und an die Auswerteeinheit (7) zu übermitteln, und die Auswerteeinheit (7) dazu ausgebildet ist, den ersten und/oder zweiten Schwellwert entsprechend der übermittelten Soll-Geschwindigkeit anzupassen, um eine Kollisionsbestimmung auch bei einer beabsichtigten Geschwindigkeitsänderung zu ermöglichen.

6. Antriebssystem (2) gemäß Anspruch 5, wobei
das Antriebssystem (2) dazu ausgebildet ist, eine erfasste Ist-Geschwindigkeit der Antriebsvorrichtung (4) zu erfassen, und an die Auswertevorrichtung (7) zu übermitteln, und die Auswertevorrichtung (7) dazu ausgebildet ist, den ersten und/oder zweiten Schwellwert entsprechend der übermittelten Soll-Geschwindigkeit und der übermittelten erfassten Ist-Geschwindigkeit anzupassen.

7. Antriebssystem (2) gemäß einem der vorangehenden Ansprüche, wobei
die Antriebsvorrichtung (4), die Antriebssteuerungsvorrichtung (5), die Auswerteeinheit (7) und der Beschleunigungssensor (6) integral vorgesehen sind.

8. Antriebssystem (2) gemäß Anspruch 7, wobei
das Antriebssystem (2) eine längenverstellbare Hubsäule (8) aufweist, und die Antriebsvorrichtung (4), die Antriebssteuerungsvorrichtung (5), die Auswerteeinheit (7) und der Beschleunigungssensor (6) in der Hubsäule (8) vorgesehen sind.

9. Tisch (1) mit einer höhenverstellbaren Tischplatte (3) mit mehreren Antriebssystemen (2) gemäß einem der vorangehenden Ansprüche, wobei
eine Kommunikationsverbindungsleitung (9) zwischen den mehreren Antriebssystemen (2) vorgesehen ist, die dazu ausgebildet ist, eine Datenübertragung zwischen den mehreren Antriebssystemen (2) zu ermöglichen.

10. Verfahren zum Bewegen einer höhenverstellbaren Tischplatte (3) eines Tisches (1) mit einem Antriebssystem (2) gemäß einem der Ansprüche 1 bis 8 mit den Schritten:
Erfassen einer Beschleunigung der Sensorbewegung;
Senden des der Sensorbewegung entsprechenden Beschleunigungssignals an die Auswerteeinheit (7);
Auswerten des Beschleunigungssignals durch die Auswerteeinheit (7);
Bestimmen eines Vorliegens einer Kollision anhand von Beschleunigungswerten, die einen Schwellwert überschreiten; und
Ausgeben eines Kollisionssignals an die Antriebssteuerungsvorrichtung (5) beim Bestimmen der Kollision.

11. Verfahren gemäß Anspruch 10, wobei
das Auswerten des Beschleunigungssignals ein Integrieren aufweist, um eine abgeschätzte Ist-Geschwindigkeit abzuschätzen.

12. Verfahren gemäß Anspruch 11, wobei
eine von der Antriebssteuerungsvorrichtung (5) bestimmte Soll-Geschwindigkeit verwendet wird, um den Schwellwert anzupassen.

13. Verfahren gemäß Anspruch 12, wobei
eine von dem Antriebssystem (2) erfasste Ist-Geschwindigkeit verwendet wird, um den Schwellwert anzupassen.

14. Verfahren gemäß einem der Ansprüche 10 bis 13, wobei
die Beschleunigungssignale von dem Beschleunigungssensor (6) durch einen Filter (10) aufbereitet werden.

15. Verfahren gemäß einem der Ansprüche 10 bis 14 mit einem Tisch (1) gemäß Anspruch 9, mit dem Schritt:
Übermitteln des Kollisionssignals von einem zu den anderen der mehreren Antriebssysteme (2).
